# EUROPÄISCHE PATENTSCHRIFT

(11) **EP 1 963 653 B1**
(45) Veröffentlichungstag und Bekanntmachung des Hinweises auf die Patenterteilung: **23.06.2010**
(21) Anmeldenummer: 06828704.4
(22) Anmeldetag: 20.12.2006
(51) Int. Cl.: F02F 3/00

(54) **MEHRTEILIGER KOLBEN FÜR EINEN VERBRENNUNGSMOTOR**
MULTIPART PISTON FOR AN INTERNAL COMBUSTION ENGINE
PISTON EN PLUSIEURS PARTIES POUR MOTEUR A COMBUSTION INTERNE

(30) Priorität: 23.12.2005 DE 102005061899
(43) Veröffentlichungstag der Anmeldung: 03.09.2008
(73) Patentinhaber: Mahle International GmbH, 70376 Stuttgart (DE)
(72) Erfinder: MESSMER, Dieter, 71686 Remseck (DE)
(74) Vertreter: Pohle, Reinhard
(86) Internationale Anmeldenummer: PCT/DE2006/002274
(87) Internationale Veröffentlichungsnummer: WO 2007/076821

(56) Entgegenhaltungen:
- EP-A1- 0 469 666
- DE-A1- 10 257 022
- DE-C- 281 030
- FR-A1- 2 681 643

## Beschreibung

Die vorliegende Erfindung betrifft einen mehrteiligen Kolben für einen Verbrennungsmotor, mit einem Kolbenoberteil und einem Kolbenunterteil, wobei das Kolbenoberteil auf seiner dem Kolbenunterteil zugewandten Seite einen mit einem Außengewinde versehenen Gewindekopf aufweist und das Kolbenunterteil auf seiner dem Kolbenoberteil zugewandten Seite einen Stützteller mit einem Tellerkörper und einem mit einem Innengewinde versehenen Gewindekörper aufweist, in welchen der Gewindekopf eingeschraubt ist.

Mehrteilige Kolben haben den großen Vorteil, dass das Kolbenoberteil und das Kolbenunterteil aus verschiedenen Materialien bestehen können. Das Kolbenoberteil ist in der Regel aus einem besonders verschleißfesten, insbesondere wärmebeständigen, aber relativ schweren Material hergestellt, während das Kolbenunterteil in der Regel zur Gewichtseinsparung aus einem weniger verschleißfesten Leichtmetallwerkstoff hergestellt ist. Hierbei können das Kolbenoberteil und das Kolbenunterteil durch Verschrauben miteinander verbunden sein, wie es bspw. in der EP 1 483 493 B1 offenbart ist.

Gattungsgemäße Kolben sind in der DE 102 57 022 A1 und EP 0 469 666 A1 beschrieben. Diese weisen einen am Kolbenoberteil angebrachten Gewindekopf und einen am Kolbenunterteil angebrachten Stützteller mit einem zum Gewindekopf korrespondierenden Gewindekörper auf, die bei der Montage des Kolbens miteinander verschraubt werden. Der mit dem Gewindekörper versehene Stützteller wird dabei tellerfederartig aufgewölbt, so dass auf den Gewindekopf eine Zugspannung ausgeübt wird, die eine dauerhafte Montageverbindung zwischen dem Kolbenoberteil und dem Kolbenunterteil bewirkt.

Problematisch ist hierbei, dass die Zugspannung so groß werden kann, dass beim Verschrauben von Kolbenoberteil und Kolbenunterteil die Gewindebohrung durch die vertikal nach oben wirkenden Zugkräfte aufweiten kann. Dadurch wird die Schraubverbindung letztendlich destabilisiert. Dies kann so weit gehen, dass der Stützteller deformiert oder sogar zerstört wird oder die Schraubverbindung auseinander gerissen wird.

Die Aufgabe der vorliegenden Erfindung besteht darin, einen derartigen Kolben bereitzustellen, bei dem das Kolbenoberteil und das Kolbenunterteil durch eine Schraubverbindung stabil miteinander verbunden sind, wobei die Schraubverbindung nicht beeinträchtigt wird.

Die Lösung besteht in einem Kolben mit den Merkmalen des Patentanspruchs 1. Erfindungsgemäß ist vorgesehen, dass in Bezug auf die Kolbenlängsachse der Gewindekörper tiefer liegt als der Verbindungsbereich.

Die erfindungsgemäße Ausgestaltung der Verbindung bewirkt, dass beim Verschrauben des Kolbenoberteils mit dem Kolbenunterteil das Innengewinde des Gewindekörpers radial auf den Gewindekopf zu bewegt wird. Dadurch wird der Gewindekörper in einer Art Stütz- bzw. Klemmwirkung gegen den Gewindekopf gezogen, so dass sich der Gewindekörper am Gewindekopf abstützt und die Schraubverbindung gestärkt und zusätzlich stabilisiert wird. Dadurch werden die in der Schraubverbindung auftretenden Zugkräfte aufgefangen und über den Stützteller abgeleitet.

Die konkrete Ausgestaltung hängt von den Anforderungen des Einzelfalls ab. Wesentlich ist nur, dass der Gewindekörper tiefer liegt als der Verbindungsbereich, so dass der beschriebene Stütz- bzw. Klemmeffekt eintritt.

Vorteilhafte Weiterbildungen ergeben sich aus den Unteransprüchen.

Der Gewindekörper weist eine mit dem Innenwinde versehene Sackbohrung aufweisen.

Um das Kolbenoberteil und das Kolbenunterteil im zusammengebauten Zustand gegeneinander abzustützen, weisen das Kolbenoberteil und das Kolbenunterteil vorzugsweise innere umlaufende Stützelemente mit inneren Auflageflächen und äußere umlaufende Stützelemente mit äußeren Auflageflächen auf. Im zusammengebauten Zustand liegen jeweils die inneren Auflageflächen einerseits und die äußeren Auflageflächen andererseits aneinander.

Ein Ausführungsbeispiel der Erfindung wird im Folgenden anhand der beigefügten Zeichnungen näher erläutert. Es zeigen in einer schematischen, nicht maßstabsgetreuen Darstellung:
- Fig. 1: einen Schnitt durch ein Ausführungsbeispiel eines erfindungsgemäßen Kolbens;
- Fig. 2: einen Schnitt durch das Ausführungsbeispiel eines erfindungsgemäßen Kolbens gemäß Fig. 1, um 90° um die Kolbenlängsachse gedreht.

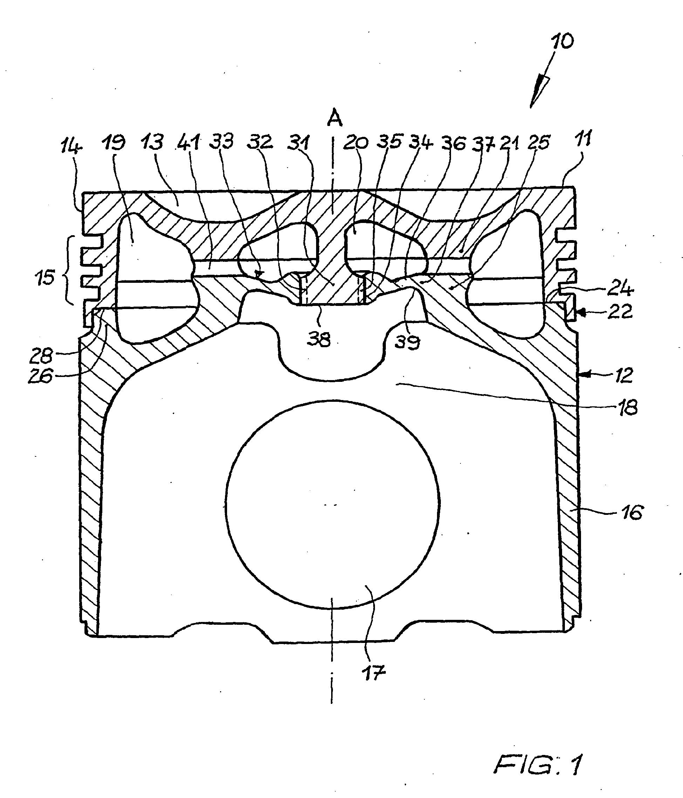

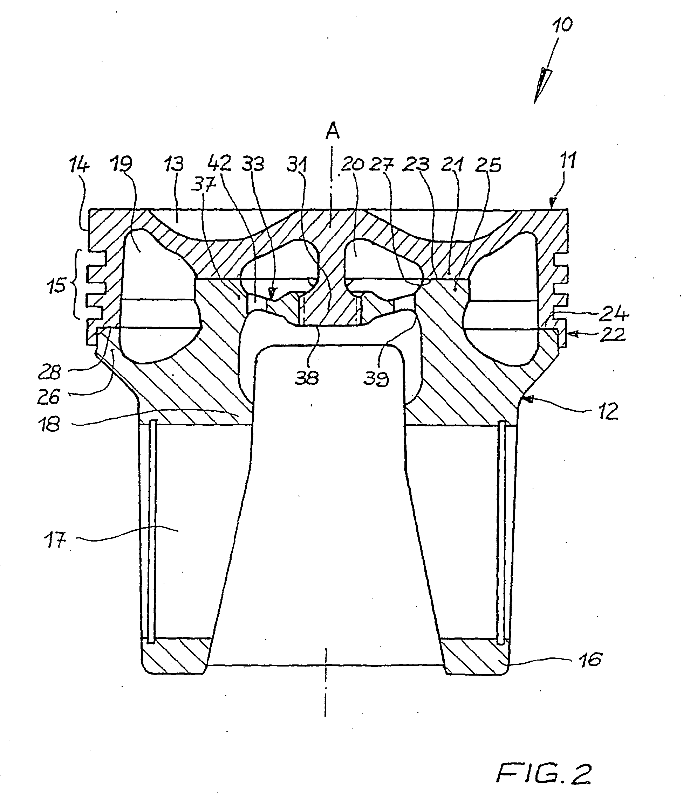

Die Fig. 1 und 2 zeigen einen Schnitt durch ein Ausführungsbeispiel eines erfindungsgemäßen Kolbens 10, wobei die Darstellung in Fig. 2 gegenüber der Darstellung in Fig. 1 um 90° gedreht ist.

Der erfindungsgemäße Kolben 10 setzt sich zusammen aus einem Kolbenoberteil 11 und einem Kolbenunterteil 12. Das Kolbenoberteil 11 weist eine Verbrennungsmulde 13 und eine Seitenwand mit einem umlaufenden Feuersteg 14 und einer umlaufen den Ringpartie 15 auf. Das Kolbenunterteil 12 weist einen Kolbenschaft 16, Naben 17 zur Aufnahme des Kolbenbolzens (nicht dargestellt) und Nabenabstützungen 18 auf, die mit dem Kolbenschaft 16 verbunden sind. Das Kolbenoberteil 11 und das Kolbenunterteil 12 bilden einen umlaufenden äußeren Kühlkanal 19 und einen umlaufenden inneren Kühlkanal 20.

Das Kolbenoberteil 11 weist ein umlaufendes inneres Stützelement 21 mit einer umlaufenden inneren Auflagefläche 23 und ein umlaufendes äußeres Stützelement 22 mit einer umlaufenden äußeren Auflagefläche 24 auf. Das Kolbenunterteil 12 weist ebenfalls ein umlaufendes inneres Stützelement 25 mit einer umlaufenden inneren Auflagefläche 27 und ein umlaufendes äußeres Stützelement 26 mit einer umlaufenden äußeren Auflagefläche 28 auf.

Im zusammengebauten Zustand sind das Kolbenoberteil 11 und das Kolbenunterteil 12 so zueinander ausgerichtet, dass die innere Auflagefläche 23 des inneren Stützelements 21 des Kolbenoberteils 11 und die innere Auflagefläche 27 des inneren Stützelements 25 des Kolbenunterteils 12 aufeinander liegen. Ebenso liegen die äußere Auflagefläche 24 des äußeren Stützelements 22 des Kolbenoberteils 11 und die äußere Auflagefläche 28 des äußeren Stützelements 26 des Kolbenunterteils 12 aufeinander.

Die Ringpartie 15 einschließlich des daran anschließenden äußeren Stützelements 22 sowie das innere Stützelement 21 des Kolbenobertells 11 einerseits und das äußere Stützelement 26 und das innere Stützelement 25 des Kolbenunterteils 12 andererseits bilden und begrenzen den umlaufenden äußeren Kühlkanal 19 des Kolbens 10.

An der dem Kolbenunterteil 12 zugewandten. Unterseite des Kolbenoberteils 11 ist ein Gewindekopf 31 im Ausführungsbeispiel mittig in der Kolbenlängsachse A angeformt. Der Gewindekopf 31 ist mit einem Außengewinde versehen.

Das Kolbenunterteil 12 ist an seiner dem Kolbenoberteil 11 zugewandten Oberseite mit einem Stützteller 33 versehen. Der Stützteller 33 weist einen mittig angeordneten Gewindekörper 34 auf, der eine zentrisch in der Kolbenlängsachse A angeordnete Gewindebohrung 35 aufweist, die mit einem Innengewinde versehen ist. Der Gewindekopf 31 ist in die Gewindebohrung 35 eingeschraubt, so dass das Kolbenoberteil 11 und das Kolbenunterteil 12 durch die resultierende Verschraubung 32 fest miteinander verbunden sind, wobei sie sich auf ihren korrespondierenden Auflageflächen 23 und 27 bzw. 24 und 28 gegeneinander abstützen.

Der Stützteller 33 weist ferner einen ringförmig umlaufenden Tellerkörper 36 auf. Der Tellerkörper 36 ist im Ausführungsbeispiel über einen definierten Verbindungsbereich 37 mit der Innenseite des inneren Stützelements 25 des Kolbenunterteils 12 verbunden. Dabei ist das untere Ende 38 des Gewindekopfs 31 in Bezug auf die Kolbenlängsachse A unterhalb des unteren Endes 39 des Verbindungsbereichs 37 angeordnet. Diese Anordnung bewirkt, dass während des Verschraubens von Gewindekopf 31 und Gewindekörper 34 der Tellerkörper 36 von der Verschraubung verursachten Zugkräften geringfügig nach oben gezogen wird. Dadurch wird das Innengewinde des Gewindekörpers 34 in einem geringen Maße radial auf den Gewindekopf 31 zu bewegt. Da der Tellerkörper 36, bedingt durch das gewählte Material und/oder die konstruktive Ausgestaltung, insbesondere seine Dicke, in geringem Maße elastisch ist, wird der Gewindekörper 34 in einer Art Stütz- bzw. Klemmwirkung gegen den Gewindekopf 31 gezogen. Dies bewirkt, dass sich der Gewindekörper 34 am Gewindekopf 31 abstützt und die Schraubverbindung gestärkt und zusätzlich stabilisiert wird. Dadurch werden die in der Schraubverbindung auftretenden Zugkräfte aufgefangen und über den Stützteller 33 abgeleitet.

Die inneren Stützelemente 21 bzw. 25, der Stützteller 33 und der Gewindekopf 31 bilden und begrenzen den umlaufenden inneren Kühlkanal 20.

Das innere Stützelement 25 des Kolbenunterteils 12 ist im Ausführungsbeispiel mit Überlaufkanälen 41 für Kühlmittel versehen, welche den umlaufenden äußeren Kühlkanal 19 mit dem inneren umlaufenden Kühlkanal 20 verbinden. Der Tellerkörper 36 ist im Ausführungsbeispiel mit Ablauföffnungen 42 für Kühlmittel versehen. Das Kühlmittel wird, wie es üblich und dem Fachmann bekannt ist, von außen dem umlaufenden äußeren Kühlkanal 19 zugeführt. Über die Überlaufkanäle 41 wird das Kühlmittel vom umlaufenden äußeren Kühlkanal 19 in den umlaufenden inneren Kühlkanal 20 transportiert und von dort über die Ablauföffnungen 42 abgeführt.

## Patentansprüche

1. Mehrteiliger Kolben (10) für einen Verbrennungsmotor, mit einem Kolbenoberteil (11) und einem Kolbenunterteil (12), wobei das Kolbenoberteil (11) auf seiner dem Kolbenunterteil (12) zugewandten Seite einen mit einem Außengewinde versehenen Gewindekopf (31) aufweist und das Kolbenunterteil (12) auf seiner dem Kolbenoberteil (11) zugewandten Seite einen Stützteller (33) mit einem Tellerkörper (36) und einem mit einem Innengewinde versehenen Gewindekörper (34) aufweist, in welchen der Gewindekopf (31) eingeschraubt ist und der Tellerkörper (36) über einen Verbindungsbereich (37) mit dem Kolbenunterteil (12) verbunden ist, **dadurch gekennzeichnet,**
**dass** der Gewindekörper (34) in Bezug auf die Kolbenlängsachse (A) tiefer liegt als der Verbindungsbereich (37).

2. Kolben nach Anspruch 1, **dadurch gekennzeichnet, dass** der Gewindekörper (34) eine mit dem Innengewinde versehene Sackbohrung aufweist.

3. Kolben nach Anspruch 1, **dadurch gekennzeichnet, dass** das Kolbenoberteil (11) und das Kolbenunterteil (12) innere umlaufende Stützelemente (21; 25) mit inneren Auflageflächen (23; 27) und äußere umlaufende Stützelemente (22; 26) mit äußeren Auflageflächen (24; 28) aufweisen und im zusammengebauten Zustand jeweils die inneren Auflageflächen (23; 27) und die äußeren Auflageflächen (24; 28) aneinander liegen.

## Claims

1. A multi-part piston (10) for an internal combustion engine with an upper piston part (11) and a lower piston part (12), whereby the upper piston part (11) features, on the side facing the lower piston part (12), a threaded end (31) with an external thread and the lower piston part (12) features, on the side facing the upper piston part (11), a supporting disc (33) with a disc body (36) and a threaded body (34) with an inside thread into which the threaded end (31) is screwed and the disc body (36) is connected via a connection area (37) with the lower piston part (12) **characterised by the fact,**
that the threaded body (34) lies, in relation to the longitudinal piston axis (A) lower than the connection area (37).

2. Piston according to Claim 1, **characterised by** the fact that the threaded body (34) features a blind hole with an inside thread.

3. Piston according to Claim 1, **characterised by** the fact that the upper piston part (11) and the lower piston part (12) feature support elements (21; 25) running on the inner circumference with inner bearing surfaces (23; 27) and outer support elements (22; 26) running on the outer circumference with outer bearing surfaces (24; 28) and where, in the assembled condition, the inner bearing surfaces (23; 27) and the outer bearing surfaces (24; 28) touch.

## Revendications

1. Piston (10) en plusieurs parties destiné à un moteur à combustion interne, composé d'une partie supérieure (11) et d'une partie inférieure (12), dans lequel la partie supérieure (11) comporte sur sa face orientée vers la partie inférieure (12) une tête filetée (31) et dans lequel la partie inférieure (12) comporte sur sa face orientée vers la partie supérieure (11) un support (33) muni d'une rondelle (36) et un corps taraudé (34) dans lequel est vissée la tête filetée (31) et dans lequel la rondelle (36) est solidaire de la partie inférieure (12) par l'intermédiaire d'une zone de raccordement (37), **caractérisé en ce que,** le corps taraudé (34) se situe à un niveau inférieur à celui de la zone de raccordement (37) par rapport à l'axe longitudinal (A) du piston.

2. Piston selon la revendication 1, **caractérisé en ce que** le corps taraudé (34) comporte un trou borgne taraudé.

3. Piston selon la revendication 1, **caractérisé en ce que** les éléments-supports (21, 25) et les éléments-supports (22, 26) se trouvant respectivement sur le pourtour intérieur de la partie supérieure (11) et sur le pourtour extérieur de la partie inférieure (12) du piston comportent respectivement des surfaces d'appui intérieures (23, 27) et des surfaces d'appui extérieures (24, 28) et qu'en l'état assemblé, les surfaces d'appui intérieures (23, 27) reposent contre les surfaces d'appui extérieures (24, 28) respectives.
